# EUROPEAN PATENT APPLICATION

(11) **EP 3 838 394 A1**
(43) Date of publication of application: **23.06.2021**
(21) Application number: 20214992.8
(22) Date of filing: 17.12.2020
(51) Int. Cl.: B01J 8/02

(54) **CATALYTIC CONVERSION DEVICE AND METHOD FOR CATALYTIC CONVERSION OF A FEED GAS INTO A PRODUCT GAS IN AN ENDOTHERMIC REACTION**

(30) Priority: 19.12.2019 NL 2024505
(71) Applicant: Green Vision Holding B.V., 6827 AV Arnhem (NL)
(72) Inventor: SCHOLTEN, Anton, 6827 AV Arnhem (NL); WESTENDORP, Gerard, 6827 AV Arnhem (NL); DER KINDEREN, Joannes Maria, 6827 AV Arnhem (NL); LIEFTINK, Dick Johan, 6827 AV Arnhem (NL)
(74) Representative: van Dam, Vincent

(57) **Abstract**

The present invention relates to a catalytic conversion device for converting a feed gas into a product gas in an endothermic reaction and a method for catalytic conversion of a feed gas into a product gas in an endothermic reaction.

## Description

The present invention relates to a catalytic conversion device for converting a feed gas into a product gas in an endothermic reaction and a method for catalytic conversion of a feed gas into a product gas in an endothermic reaction.

Endothermic processes require the input of heat, which requires energy. Such endothermic processes are for instance carried out in so-called reformers or pre-reformers.

While catalytic conversion devices are in general provided with insulation means, still high amounts of process heat may be lost to the surroundings. This has adverse implications on the energy efficiency of such processes.

Furthermore, it is also desired that the temperature on the outside surface of catalytic conversion devices is controlled below or at a certain level. It is noted in this respect that many industrial environments have to comply with government legislation in order to minimize risks of explosion, for instance to protect employees from explosion risk in areas with an explosive atmosphere. An example of such legislation is the ATEX directive which prescribes what equipment and work space is allowed in an environment with an explosive atmosphere. In order to comply with such legislation, temperatures on the outside surfaces of equipment should be kept below certain temperatures.

### Summary of the invention

It is an object of the present invention to provide a catalytic conversion device with reduced temperature loss to the outside surface thereof and which at the same time has an outside surface that can be maintained at or below a certain temperature level.

To achieve this, the invention relates in a first aspect to a catalytic conversion device for converting a feed gas into a product gas in an endothermic reaction in accordance with claim 1.

In a second aspect the invention relates to a method for catalytic conversion of a feed gas into a product gas in an endothermic reaction in accordance with claim 8.

The method of the second aspect may be carried out with the device of the first aspect.

### Short description of the drawings

Fig.1 shows a schematic representation of the principle of an embodiment of the invention.
Fig.2 shows a schematic representation of the principle of another embodiment of the invention.
Fig.3 shows a schematic representation of the principle of still another embodiment of the invention.
Fig.4 shows a schematic representation of the principle of still another embodiment of the invention.
Fig.5 shows a schematic representation of an exemplary steam reformer in accordance with the invention.

### Detailed description of the invention

In accordance with the invention a catalytic conversion device is configured for converting a feed gas into a product gas in an endothermic reaction. For this purpose the device comprises a reactor for conversion of a feed gas into a product gas in an endothermic reaction.

This reactor has an inlet for the feed gas and an outlet for the product gas. Via the inlet the catalytic reactor can be supplied with feed gas. In order to allow the conversion of said feed gas into a product gas in an endothermic reaction the device also comprises a heat source for supplying heat to allow the endothermic reaction. This heat source is in particular a burner that uses combustion gas and air in order to generate heat.

Both the reactor and heating source are included in a thermally insulated chamber. This chamber comprises one or more walls comprising thermal insulation material. These one or more walls at least partially surround the reactor and burner. The thermal insulation material may for instance be in the form of a continuous entity or in the form of multiple layers, either within one wall or distributed between several walls, said walls being laterally positioned with respect to each other.

Extending in the longitudinal direction of said wall(s) one or more first ingoing flow paths are provided within said thermal insulation material or between walls comprising said thermal insulation material. These one or more first ingoing flow paths are provided with an inlet in contact with the outside of said thermally insulated chamber and an outlet in connection with the inside of said thermally insulated chamber to enable a gas flow from the outside of said thermally insulated chamber (via said inlet) to the inside of said thermally insulated chamber (via said outlet). In accordance with the invention therefore one or more gas flows are provided from the outside of said thermally insulated chamber to the inside of said thermally insulated chamber through said one or more first ingoing flow paths. This way the one or more gas flows can absorb heat produced on the inside of said thermally insulated chamber. This may for instance be heat from the burner or heat from the product gas or both. The heat absorbed by these one or more gas flows may then be used at least partly as additional heat source for said endothermic reaction. This is advantageous for energy efficiency of the endothermic catalytic conversion process, because less fuel has to be introduced to the burner. In addition, the one or more gas flow reduce the temperature on the outside surface of the device preventing a risk of explosion in environments at risk of this and less insulation material will be needed in order to reach the same surface temperature. In other words, insulation efficiency is improved.

The walls comprising thermal insulation material at least partially surround the reactor and burner. In order to minimize heat loss it is preferred that the thermal insulation material surrounds the reactor and burner for a major part, more preferably that the thermal insulation material substantially surrounds the reactor and burner, even more preferably that the thermal insulation material fully surrounds the reactor and burner. For the same reason, it is preferred that the walls are provided at least at a side portion of the device, more preferably at least a side portion and top portion of the device, more preferably also a bottom portion of the device.

In order to optimally absorb heat and for efficient heat exchange, it is preferred that the one or more first ingoing flow paths through which gas is passed cover as much as practically possible of the area of the insulation material surrounding the reactor and burner. For this purpose, the first ingoing flow path(s) should extend in the longitudinal direction of the walls. This can be within the insulation material, such as between layers of insulation material or integrated or embedded in the insulation material or between the outer surface of the insulation material of a first wall and the inner surface of a second wall that is laterally more distanced from the chamber than the first wall. It is in this respect preferred that a first ingoing flow path extends over at least part of the length of the side walls, preferably substantially the full length, from top to bottom. This can be done for instance by evenly distributing multiple channels within the insulation material or over the insulation material when the first ingoing flow paths are provided between walls or between layers of insulation material within a wall, for instance in parallel lines or in a webbed pattern.

In a particularly suitable embodiment a first ingoing flow path can be provided as a path between layers of insulation material or between two laterally consecutive walls comprising insulation material. Preferably this path constitutes a space that at least partially surrounds the reactor and burner. Preferably this space surrounds the reactor and burner substantially to the same extent as said insulation material. In this respect a first ingoing flow path may be a continuous space between layers of insulation material. By way of a preferred example a first ingoing flow path may be configured in the side walls of the device as a space between two layers of insulation material and extending around the reactor and burner over at least part of the length of the side walls, preferably substantially the full length, so that gas may flow through it from top to bottom or the other way around, depending on the configuration of the device. If a first ingoing flow path is arranged as a space between layers of insulation material, the insulation material may instance be covered with aluminum film on the side facing the flow path.

In another particularly preferred embodiment a first ingoing flow path can be provided as a space surrounding the insulation material at least in part. Preferably this space surrounds the reactor and burner substantially to the same extent as said insulation material. In this respect a first ingoing flow path may be a continuous space on the outer surface of the insulation material, such as between two layers of insulation material or between two laterally consecutive walls. By way of a preferred example a first ingoing flow path may be configured in or between the side walls of the device and extending around the reactor and burner over at least part of the length of the side walls, preferably substantially the full length, so that gas may flow through it from top to bottom or the other way around, depending on the configuration of the device. If a first ingoing flow path is arranged as a space surrounding the insulation material, the insulation material may for instance be covered with aluminum film on the side facing the flow path and a protective layer may be applied on the outermost surface of the device.

Multiple first ingoing flow paths may be provided in and/or between the walls of insulation material, but especially when a first ingoing flow path is a continuous space between layers of insulation material or between walls a single flow path may suffice.

In a preferred embodiment a first ingoing flow path is configured within the insulation material such that an end part of it is closer to the inside of the chamber housing the heating source and reactor than a begin part of the first ingoing flow path. This ensures that the gas flowing through the first ingoing flow path is able to absorb heat as it flows through the flow path along its full course through the insulation material. Namely, at the end of the first ingoing flow path the temperature of the gas will be higher compared to the beginning of the first ingoing flow path due to absorption of heat along its passage. Therefore, if the end part of a first ingoing flow path is closer inside of the chamber, the gas flowing through it will still be able to absorb heat even though its temperature has been increased in the course of its passage through the first ingoing flow path. If such a first ingoing flow path is configured in the side walls of the device as a space between two layers of insulation material and extending around the reactor and burner over at least part of the length of the side walls, this first ingoing flow path will have a cone like shape surrounding the chamber.

As mentioned above, the endothermic conversion reaction requires heat to allow conversion of a feed gas into a product gas. The heat source for providing this heat is a burner. Such a burner requires combustion gas and air, such as a hydrocarbon based fuel gas that may for instance contain methane, including natural gas. When using a burner exhaust gas (e.g. flue gas) should also be discharged. For this purpose the device of the invention may comprise at least one combustion gas flow path configured to provide combustion gas to the burner and at least one burner exhaust gas flow path configured to discharge burner exhaust gas to the outside of the thermally insulated chamber.

In an embodiment of the invention an additional ingoing gas flow may be passed from the outside of said thermally insulated chamber to the inside of said thermally insulated chamber via one or more second ingoing flow paths configured to extending through the inside of said thermally insulated chamber or closer to the inside of said thermally insulated chamber than said one or more first ingoing flow paths, such to allow said additional ingoing gas flow to absorb heat produced on the inside of said thermally insulated chamber and allow reuse of at least part of the absorbed heat as additional heat source for said endothermic reaction. For this purpose, the device may comprise one or more second ingoing flow paths configured to allow additional ingoing gas flow from the outside of said thermally insulated chamber to the inside of said thermally insulated chamber and extending through the inside of said thermally insulated chamber or closer to the inside of said thermally insulated chamber than said one or more first ingoing flow paths, such to allow said additional ingoing gas flow to absorb heat produced on the inside of said thermally insulated chamber and allow reuse of at least part of the absorbed heat as additional heat source for said endothermic reaction. "Through the inside" in this respect is to be understood as not extending through the insulation material and "closer to the inside" to be understood as extending through the insulation material. The gas from a second ingoing flow path will be hotter than the gas from a first ingoing flow path, which allows for regulation of the temperature of a gas mixture entering the thermally insulated chamber by dosing the amounts of gas from the first and second ingoing flow paths.

If the abovementioned second ingoing flow path(s) through the inside of said thermally insulated chamber or closer to the inside of said thermally insulated chamber than said one or more first flow paths are used, in a preferred embodiment air may be passed through one or more of said second ingoing flow path(s) to supply air to said burner. For this purpose, one or more of said second ingoing flow path(s) may be configured to supply air to said burner, so as to function as a second air supply flow path. Air may thus be passed through at least one second air supply flow path which is configured to pass air to said burner and which extends through the inside of said thermally insulated chamber or closer to the inside of said thermally insulated chamber than said first air supply flow path. For this purpose, said device may comprise at least one second air supply flow path configured to pass air to said burner and positioned on the inside of said thermally insulated chamber or closer to the inside of said thermally insulated chamber than said first air supply flow path. The air from said second air supply flow path will be hotter than the air from said first air supply flow path, which allows regulation of the temperature of the air supplied to the burner by mixing the gas from the first and second air supply flow path.

In addition or alternatively, feed gas may be passed through another one or more of said second ingoing flow path(s) to supply feed gas to said reactor. For this purpose, one or more of said second ingoing flow path(s) is configured to supply feed gas to said reactor, so as to function as a second feed gas flow path. In one embodiment feed gas is also passed to the reactor through at least one second feed gas flow path extending through the inside of said thermally insulated chamber or closer to the inside of said thermally insulated chamber than said first feed gas flow path. For this purpose the device of the invention may comprise at least one second feed gas flow path configured to pass feed gas to said reactor and extending through the inside of said thermally insulated chamber or closer to the inside of said thermally insulated chamber than said first feed gas flow path. The feed gas from said second feed gas flow path will be hotter than the feed gas from said first feed gas flow path, which allows for regulation of the temperature of the feed gas entering the reactor by dosing the amounts of gas from the first and second feed gas flow path.

It is possible that one or more of the second ingoing flow paths may function as feed gas flow path and one or more other second ingoing flow paths may function as air supply flow path. Depending on the embodiment, it is also possible in case of multiple second ingoing flow paths that all second ingoing flow paths function as feed gas flow path. Depending on the embodiment, it is also possible in case of multiple second ingoing flow paths that all second ingoing flow paths function as air supply flow path.

During operation of the device and method of the invention heat is generated in the form of outgoing hot gases, including product gas and burner exhaust gas. These outgoing gases can be passed out of the device via outgoing flow paths extending from the inside of said thermally insulated chamber to the outside of the thermally insulated chamber. In a preferred embodiment of the invention outgoing gas flow flowing from the inside said thermally insulated chamber to the outside of said thermally insulated chamber through outgoing flow paths is allowed to exchange heat with said ingoing gas flow in said one or more first ingoing flow paths and/or second ingoing flow paths. A single outgoing flow path will then exchange heat with either an ingoing gas flow in a first ingoing flow path or with an ingoing gas flow in a second ingoing flow path.

In one embodiment the outgoing gases can be passed out of the device via outgoing flow paths extending from the inside of said thermally insulated chamber to the outside of the thermally insulated chamber. In a preferred embodiment of the invention outgoing gas flow flowing from the inside said thermally insulated chamber to the outside of said thermally insulated chamber through outgoing flow paths is allowed to exchange heat with said ingoing gas flow in said one or more first ingoing flow paths. The device according to the invention may comprise one or more outgoing flow paths from the inside of said thermally insulated chamber to the outside of the thermally insulated chamber, wherein said one or more outgoing flow paths are configured to allow outgoing gas flow from the inside of said thermally insulated chamber to the outside of the thermally insulated chamber; and wherein one or more of said first ingoing flow path(s) is arranged in a heat exchanging manner with one or more of said outgoing flow path(s), such to allow absorption of heat by said ingoing gas flow from said outgoing gas flow. These outgoing flow path(s) may extend in the insulation material the same way as described for the first ingoing flow path(s), albeit closer to the inside of the thermally insulated chamber than the first ingoing flow path(s). It is also possible that an outgoing flow path extends on the inside of the thermally insulated chamber, i.e. not extending within the insulation material.

In accordance with the method of the invention air may be passed through one or more of said first ingoing flow path(s) to supply air to said burner. For this purpose in the device said first ingoing flow path(s) may be configured to supply air to said burner, so as to function as a first air supply flow path. Air may thus be passed from the outside of said thermally insulated chamber to said burner via at least one of said first ingoing flow paths. This way air can absorb heat produced on the inside of said thermally insulated chamber. Due to the pre-heated air supplied less combustion gas is needed by the burner. On the other hand, the absorption of heat by the air flowing through the first ingoing flow path(s) reduces the temperature on the outside surface of the device, so that less insulation material will be required to achieve a desired outer surface temperature of the device, thereby increasing insulation efficiency.

Alternatively or in addition, feed gas may be passed through another one or more of said first ingoing flow path(s) to supply feed gas to said reactor. For this purpose, one or more of said first ingoing flow path(s) may be configured to supply feed gas to said reactor, so as to function as a first feed gas flow path.

It is possible that one or more of the first ingoing flow paths may function as air supply flow path and one or more other first ingoing flow paths may function as feed gas flow path.

It is also possible in case of multiple first ingoing flow paths that all first ingoing flow paths function as feed gas flow path.

It is also possible in case of multiple first ingoing flow paths that all first ingoing flow paths function as air supply flow path. This would be a very suitable embodiment.

Feed gas may thus be passed from the outside of said thermally insulated chamber to said reactor via at least one of said first ingoing flow paths within or over the insulation material when said first ingoing flow paths are provided between walls or between layers of insulation material. This way feed gas can absorb heat produced on the inside of said thermally insulated chamber. Due to the pre-heated feed gas introduced into the reactor less heat from the burner will be necessary for the endothermic reaction to take place. On the other hand, the absorption of heat by the feed gas reduces the temperature on the outside surface of the device, so that less insulation material will be required to achieve a desired outer surface temperature of the device.

In a preferred embodiment heat from exhaust gas of the abovementioned burner is used to heat gas in the first ingoing flow path(s), such as air for the burner or feed gas for the reactor.

In this respect it is preferred that burner exhaust gas is discharged from the inside to the outside of the thermally insulated chamber via one or more of said outgoing flow path(s), and wherein heat is allowed to exchange from said burner exhaust gas with gas flowing through one or more of said first ingoing flow path(s). For this purpose, in the device one or more of said outgoing flow path(s) may be configured to discharge burner exhaust gas from the inside to the outside of the thermally insulated chamber so as to function as one or more burner exhaust gas flow path, wherein one or more of said burner exhaust gas flow path(s) is arranged in a heat exchanging manner with one or more of said first ingoing flow path(s).

Heat produced in the thermally insulated chamber may be comprised in burner exhaust gas. In a highly preferred embodiment, heat is allowed to exchange from said burner exhaust gas with air flowing through one or more of said first ingoing flow path(s). For this purpose one or more of said burner exhaust gas flow path(s) may be arranged in a heat exchanging manner with one or more of said first air supply flow path(s). This way air can absorb heat produced on by the burner. Due to the pre-heated air supplied to the burner combustion will be more efficient. On the other hand, the absorption of heat by the air flowing through the flow path(s) within or over the insulation material when said first ingoing flow paths are provided between walls or between layers of insulation material reduces the temperature on the outside surface of the device, so that less insulation material will be required to achieve a desired outer surface temperature of the device, thereby increasing insulation efficiency.

Alternatively or in addition, it is also possible that heat from exhaust gas of the abovementioned burner is used to pre-heat feed gas. In this respect burner exhaust gas may be passed through at least one of burner exhaust gas flow path wherein heat is allowed to exchange from said burner exhaust gas flow path to the first feed gas flow path which is extending through or over the insulation material when said first ingoing flow paths are provided between walls or between layers of insulation material. For this purpose, in the device at least one of said burner exhaust gas flow paths may be arranged with respect to the first feed gas flow path such to enable exchange of heat from the burner exhaust gas flow path to said first feed gas flow path. This way the exhaust gas from the burner pre-heats the feed gas before entry into the reactor, allowing re-using heat produced in the thermally insulated chamber, and thus lowering the amount of external energy required for the endothermic reaction.

For the reaction in the reactor an elevated temperature is needed. The heat needed to compensate for the heat used by the reaction and possibly also the heat to get the feed at a predetermined temperature may be supplied by the burner, but the present invention allows also additional sources of heat. Heat produced in the thermally insulated chamber may also be comprised in product gas. In one embodiment product gas may therefore passed from the inside to the outside of the thermally insulated chamber through one or more of the abovementioned outgoing flow paths, while heat is allowed to exchange from said product gas with gas flowing through one or more of said first ingoing flow path(s). For this purpose, one or more of said outgoing flow path(s) may be configured to pass product gas from the inside to the outside of the thermally insulated chamber so as to function as one or more product gas flow path, while one or more of said product gas flow path(s) is arranged in a heat exchanging manner with one or more of said first ingoing flow path(s). In this case the hot product gas produced in the reactor during it passage out of the device may transfer its heat to the feed gas flowing through a said first ingoing flow path in the direction of the reactor. This way the product gas pre-heats the feed gas before entry into the reactor, allowing re-using heat produced in the thermally insulated chamber, and thus lowering the amount of combustion gas required for the endothermic reaction. It is also possible that product gas is passed through at least one product gas flow path from the outlet of the reactor to the outside of the thermally insulated chamber, while heat is allowed to exchange from said product gas flow path to said first air supply flow path. For this purpose, in said device the product gas flow path and first air supply flow path may be arranged with respect to each other to enable exchange of heat from the product gas flow path to the first air supply flow path.

It is possible that one or more of the outgoing flow paths may function as product gas flow path and one or more other outgoing flow paths may function as burner exhaust gas flow path. Depending on the embodiment, it is also possible in case of multiple outgoing flow paths that all outgoing flow paths function as product gas flow path. Depending on the embodiment, it is also possible in case of multiple outgoing flow paths that all outgoing flow paths function as burner exhaust flow path.

In an embodiment, burner exhaust gas is discharged from the inside to the outside of the thermally insulated chamber through one or more of said outgoing flow path(s), and wherein burner exhaust gas flowing through said one or more outgoing flow path(s) is allowed to exchange heat with gas flowing through one or more of said second ingoing flow path(s). For this purpose, one or more of said outgoing flow path(s) may be configured to discharge burner exhaust gas from the inside to the outside of the thermally insulated chamber so as to function as one or more burner exhaust gas flow path, while one or more of said burner exhaust flow path(s) is arranged in a heat exchanging manner with one or more of said second ingoing flow path(s).

Alternatively or in addition, product gas may be discharged from the inside to the outside of the thermally insulated chamber through one or more of said outgoing flow path(s), while product gas flowing through said one or more outgoing flow path(s) is allowed to exchange heat with gas flowing through one or more of said second ingoing flow path(s). For this purpose, one or more of said outgoing flow path(s) may configured to pass product gas from the inside to the outside of the thermally insulated chamber so as to function as one or more product gas flow path, while one or more of said product gas flow path(s) is arranged in a heat exchanging manner with one or more of said second ingoing flow path(s).

By way of example, said at least one product gas flow path may be provided extending from the outlet of the reactor to the outside of the thermally insulated chamber, wherein said product gas flow path and second feed gas flow path can be arranged with respect to each other to enable exchange of heat from the product gas flow path to the second feed gas flow path. In this case product gas can be passed through at least one product gas flow path from the outlet of the reactor to the outside of the thermally insulated chamber in such a way that heat is allowed to exchange from said product gas flow path to said second feed gas flow path during its passage towards the outside of the device.

Alternatively or in addition, heat from burner exhaust gas may be used to pre-heat the feed gas in the second feed gas flow path. In an embodiment therefore feed gas may be passed to said reactor through at least one second feed gas flow path extending through the inside of said thermally insulated chamber or closer to the inside of said thermally insulated chamber than said first feed gas flow path. Burner exhaust gas may be passed through said at least one of burner exhaust gas flow path such that heat is allowed to exchange from said burner exhaust gas flow path to said second feed gas flow path. For this purpose, in the device at least one of said burner exhaust gas flow paths may be arranged with respect to said second feed gas flow path such to enable exchange of heat from the burner exhaust gas flow path to said second feed gas flow path.

As a further example, if a second air supply flow path as mentioned above is used, product gas may be passed through at least one product gas flow path from the outlet of the reactor to the outside of the thermally insulated chamber such that heat is allowed to exchange from said product gas flow path to said second air supply flow path. For this purpose, in said device said product gas flow path and second air supply flow path may be arranged with respect to each other to enable exchange of heat from the product gas flow path to the second air supply flow path. Alternatively or in addition, burner exhaust gas may be passed through said at least one of burner exhaust gas flow path and heat may be allowed to exchange from said burner exhaust gas flow path to said second air supply flow path. For this purpose, in the device said burner exhaust gas flow path may be arranged with respect to said second air supply flow path such to enable exchange of heat from the burner exhaust gas flow path to said second air supply flow path.

The provision of a first air supply flow path extending through or over the insulation material when said first ingoing flow paths are provided between walls or between layers of insulation material, and a second air supply flow path extending through the inside of said thermally insulated chamber or closer to the inside of said thermally insulated chamber than said first air supply flow path makes it possible to regulate the temperature of the air supplied to the burner. This can be done by varying amounts of air from the first and second air supply flow paths before supplying air to the burner. For instance, to increase the temperature the ratio of the amount of air from the second air supply flow path to the amount of air from the first air supply flow path can be increased. Therefore, in an embodiment air from said first air supply flow path is mixed with air supply from said second air supply flow path prior to supplying the air to the burner. Therefore, air from one or more of said first ingoing flow path(s) may be mixed with air from one or more of said second ingoing flow path(s) prior to supplying the air to the burner. The amounts of air from said one or more first ingoing flow path mixed with air from said one or more second ingoing flow path can be based on their respective temperatures, so as to control the temperature of the resulting mixture of air supplied to the burner at a predetermined temperature. For this purpose, the device may comprise mixing means upstream of said burner and configured to mix air from one or more of said first air supply flow path(s) with air from one or more of said second air supply flow path(s); and control means configured to control the amounts of air from said one or more first air supply flow path mixed with air from said one or more second air supply flow path based on their respective temperatures, so as to control the mixture of air to be supplied to the burner at a predetermined temperature.

Further, the provision of a first feed gas flow path extending through the insulation material and a second feed gas flow path extending through the inside of said thermally insulated chamber or closer to the inside of said thermally insulated chamber than said first feed gas flow path makes it possible to regulate the temperature of the feed gas introduced into the reactor. This can be done by varying amounts of gas from the first and second feed gas flow paths before introduction into the reactor. For instance, to increase the temperature the ratio of the amount of gas from the second feed gas flow path to the amount of gas from the first feed gas flow path can be increased. Therefore, feed gas from one or more of said first ingoing flow path(s) may be mixed with feed gas from one or more of said second ingoing flow path(s) prior to supplying the feed gas to the reactor. The amounts of feed gas from said one or more first ingoing flow path mixed with feed gas from said one or more second ingoing flow path can be based on their respective temperatures, so as to control the temperature of the resulting mixture of feed gas supplied to the reactor at a predetermined temperature. For this purpose, the device may comprise mixing means upstream of said reactor and configured to mix feed gas from one or more said first feed gas flow path(s) with feed gas from one or more of said second feed gas flow path(s); and control means configured to control the amounts of feed gas from said one or more first feed gas flow path mixed with feed gas from said one or more second feed gas flow path based on their respective temperatures, so as to control the temperature of the resulting mixture of feed gas to be entered in the reactor at a predetermined temperature.

In this application reference is made the term flow path(s) is used, which is to be understood as one flow path or more flow paths. This applies to all flow path(s) mentioned in this application, such as first ingoing flow path(s), second ingoing flow path(s), outgoing flow path(s), exhaust gas flow path(s), product gas flow path(s), first feed gas flow path(s), second feed gas flow path(s), first air supply flow path(s), second air supply flow path

In one embodiment the method of the invention is a steam reforming method. In this case said catalytic conversion device is a steam reformer device. The endothermic reaction in this case comprises reacting a hydrocarbon feed gas with steam to give a hydrogen containing product gas. Preferably said hydrocarbon feed gas comprises methane. Such a steam reforming method usually applies a burner which is supplied with air and combustion gas as specified above.

In another embodiment the method of the invention is a pre-reforming method. In this case said catalytic conversion device is a pre-reformer device. The endothermic reaction in this case comprises reacting a hydrocarbon feed gas with steam to give a methane rich product suitable for downstream reforming. Such a pre-reforming method usually applies a burner which is supplied with air and combustion gas as specified above.

### Detailed description of the drawings

The invention will now be further elucidated in the attached drawings. The following explanation is meant to illustrate and explain the invention and not to limit the claims. The dimensions in the drawings are not necessarily proportional to the actual dimensions.

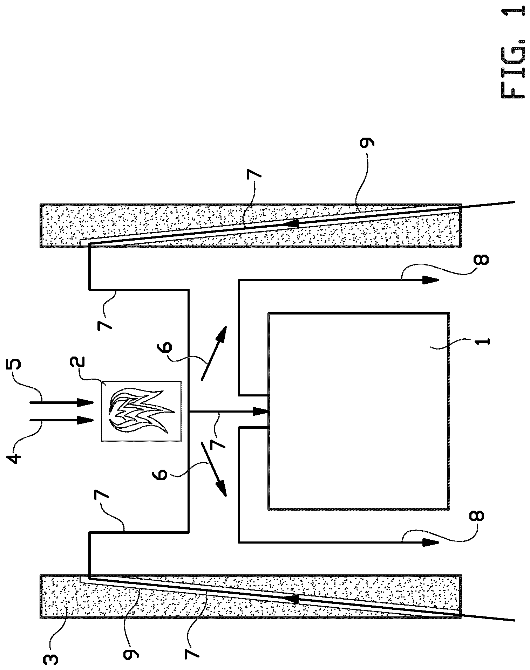

Fig. 1 shows the principle of a first exemplary embodiment of the invention. A reactor 1 for conversion of said feed gas into said product gas in an endothermic reaction is heated via a heat source in the form of a burner 2. Reactor 1 and burner 2 are positioned in a thermally insulated chamber comprising walls of thermal insulation material 3. The burner is supplied with air 4 and combustion gas 5 to produce hot burner exhaust gas 6. Reactor 1 is supplied with feed gas 7 which is converted to product gas 8. Feed gas 7 is supplied to reactor 1 via feed gas flow path 9, which is provided in the insulation material 3. This way feed gas 7 can absorb heat from the exhaust gas 6. The heat absorbed by feed gas 7 may then be used at least partly as additional heat source for the endothermic reaction in reactor 1. This is advantageous for energy efficiency of the endothermic catalytic conversion process, because less energy has to be introduced from a source outside the device, or by the burner. In addition, due to the absorption of heat by the feed gas the temperature on the outside surface of the device is reduced, preventing a risk of explosion in environments at risk of this. Furthermore, less insulation material will be needed in order to reach a desired outside surface temperature. In this preferred embodiment flow path 9 is configured such that an end part of it is closer to the inside of the chamber housing the burner 2 and reactor 1 than a begin part of the flow path. This ensures that the feed gas 7 flowing through the feed gas flow path 9 is able to absorb heat as it flows through the feed gas flow path 9 along its full course through the insulation material 3.

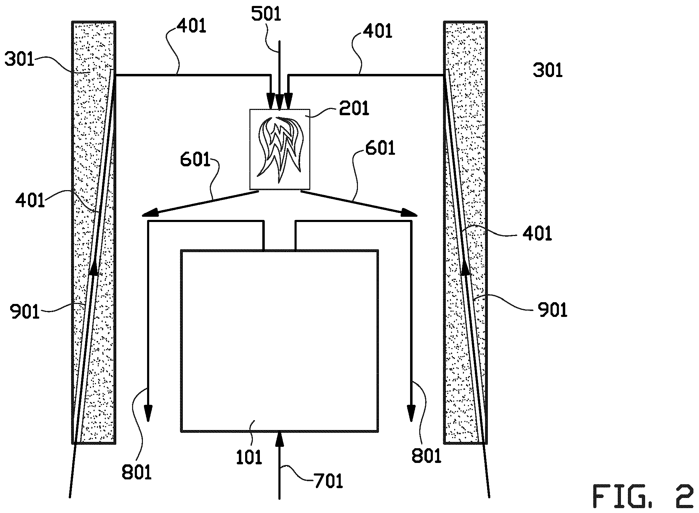

Fig. 2 shows the principle of a second exemplary embodiment of the invention. A reactor 101 for conversion of said feed gas 701 into said product gas 801 in an endothermic reaction is heated via a heat source in the form of a burner 201. Reactor 101 and burner 201 are positioned in a thermally insulated chamber comprising walls of thermal insulation material 301. The burner is supplied with air 401 via air supply flow path 901 and combustion gas 501 to produce hot burner exhaust gas 601. Reactor 101 is supplied with feed gas 701 from a source not shown, which is converted to product gas 801. The heat absorbed by the air 401 may then be used at least partly as additional heat source for the endothermic reaction in reactor 101, namely in the form of pre-heated air. This is advantageous because less fuel is needed to obtain the same amount of heat for the reactor. In addition, the due to the absorption of heat by the air the temperature on the outside surface of the device is reduced, preventing a risk of explosion in environments at risk of this. Furthermore, less insulation material will be needed in order to reach a desired outside surface temperature. In this preferred embodiment flow path 901 is configured such that an end part of it is closer to the inside of the chamber housing the burner 201 and reactor 101 than a begin part of the flow path. This ensures that the air 401 flowing through the air supply flow path 901 is able to absorb heat as it flows through the feed gas flow path 901 along its full course through the insulation material 301.

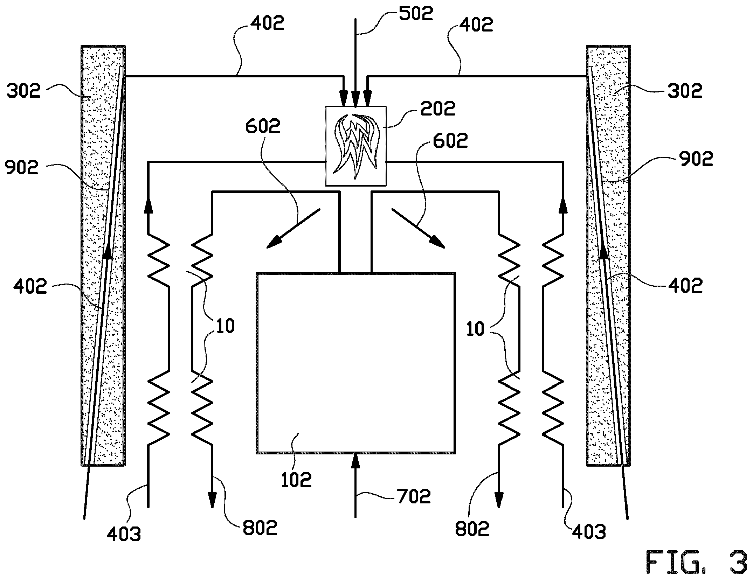

Fig. 3 shows the principle of a third exemplary embodiment of the invention. A reactor 102 for conversion of said feed gas 702 into said product gas 802 in an endothermic reaction is heated via a heat source in the form of a burner 202. Reactor 102 and burner 202 are positioned in a thermally insulated chamber comprising walls of thermal insulation material 302. The burner is supplied with air 402 and 403 and combustion gas 502 to produce hot burner exhaust gas 602. Reactor 102 is supplied with feed gas 702 from a source not shown, which is converted to product gas 802. In this embodiment the device a first air supply flow 402 is passed through flow path 902 provided in the insulation material 302. A second air supply flow 403 is provided through the chamber. The second air supply flow 403 is arranged an air supply flow path with respect to a flow path of product gas flow 802 to enable exchange of heat from the product gas flow path to the second air supply flow path, for instance in heat exchange areas 10. This way the second air supply flow 403 will absorb more heat than the first air supply flow 402. This allows temperature control in the burner 202, by dosing the amounts of first and second air flow to achieve a predetermined pre-heated air mixture supplied to the burner 202. In addition, also heat from the exhaust gas 602 may be absorbed by air flows 402 and 403. On the other hand, the absorption of heat by the air flows 402 and 403 reduces temperature on the outside surface of the device, and therewith increases insulation efficiency.

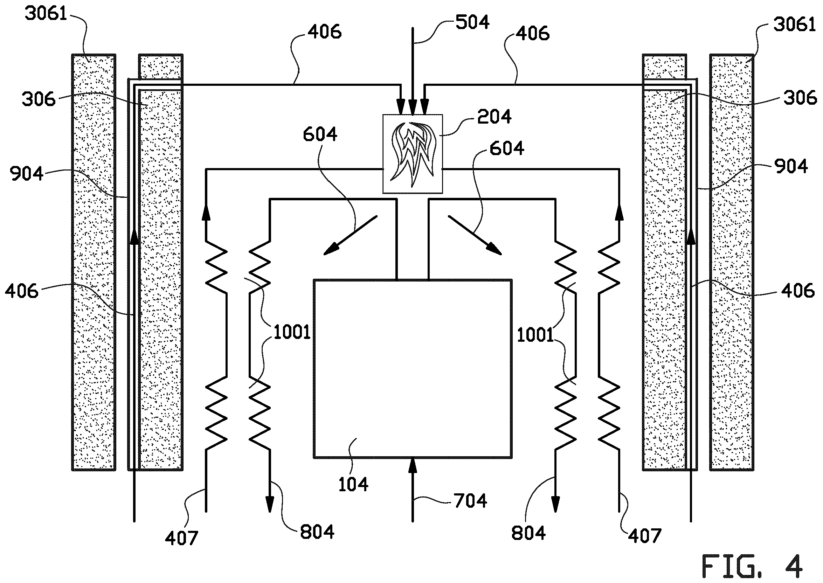

Fig. 4 shows the principle of a third exemplary embodiment of the invention. A reactor 104 for conversion of said feed gas 704 into said product gas 804 in an endothermic reaction is heated via a heat source in the form of a burner 204. Reactor 104 and burner 204 are positioned in a thermally insulated chamber comprising walls of thermal insulation material 306. The burner is supplied with air 406 and 407 and combustion gas 504 to produce hot burner exhaust gas 604. Reactor 104 is supplied with feed gas 704 from a source not shown, which is converted to product gas 804. In this embodiment of the device, a first air supply flow 406 is passed through flow path 904 provided over the insulation material of a first wall 306 such that is positioned between said first wall 306 and a second wall 3061 at the outside surface of the device. A second air supply flow 407 is provided through the chamber. A flow path 804 of product gas is arranged such to enable exchange of heat with the second air supply flow 407 , for instance in heat exchange areas 1001. This way the second air supply flow 407 will absorb more heat than the first air supply flow 406. This allows temperature control in the burner 204, by dosing the amounts of first and second air flow to achieve a predetermined pre-heated air mixture supplied to the burner 204. In addition, also heat from the exhaust gas 604 may be absorbed by air flows 406 and 407. On the other hand, the absorption of heat by the air flows 406 and 407 reduces temperature on the outside surface of the device, and therewith increases insulation efficiency.

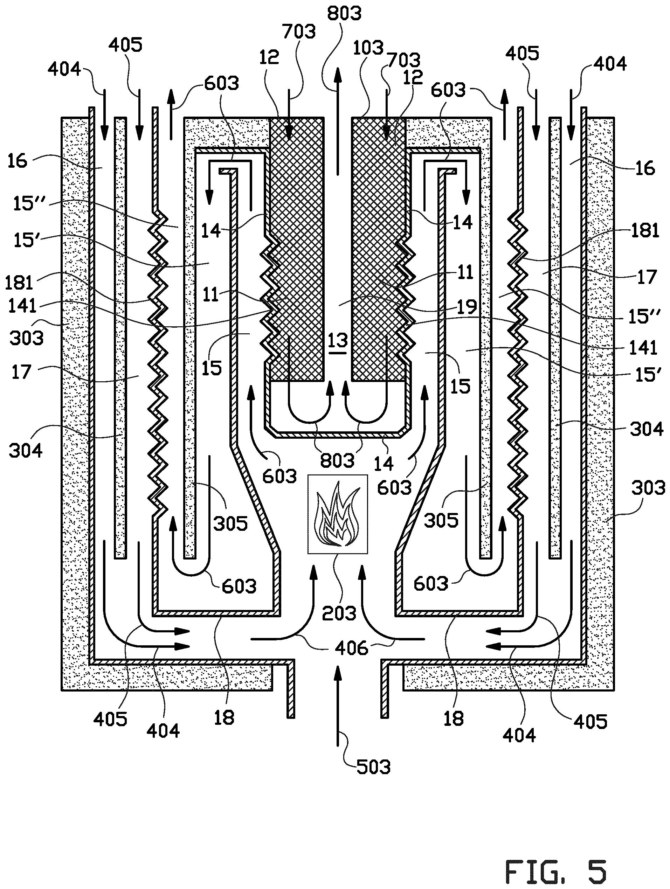

Fig. 5 shows a schematic representation of a steam reformer in accordance with the invention which is equipped with a reactor 103 with a reaction chamber 11 comprising catalyst to allow an endothermic reaction and placed concentrically around product gas outlet pipe 13. For this purpose a feed gas 703 is passed via feed gas flow path 12 into the reaction chamber 11. Feed gas flow path 12 is bounded by reactor wall 14 having heat exchange zones 141 and outlet pipe 13. After catalytic conversion a product gas 803 is passed out of the reaction chamber 11 out of the reactor 103. Reactor 103 is heated by means of burner 203. For this purpose air 404, 405, 406 and combustion gas 503 is supplied to the burner. Combustion results in hot exhaust gas 603, which is transferring heat to the reactor 103 via the heat exchange zone 141 and is passed out of the system via flow path 15, 15', 15". A first flow of air 405 for the burner is provided via a first air supply flow path 17, which is provided between layers of insulation material 304, 305. A second flow of air 404 for the burner is provided via a second air supply flow path 16. The second air supply flow path 16 is provided between layers of insulation material 303, 304. Exhaust gas flow paths 15' and 15'' are separated with insulation material 305. Heat is allowed to exchange between exhaust gas flow path 15'' and first air supply flow path 17 via heat exchanging portions 181 in separation wall 18. Due to this the first flow of air 405 will become hotter than the second flow of air 404. This makes it possible to control temperature in the heater 203, by dosing the amounts of second and first air flow 404 and 405 to an air mixture 406 of desired temperature. Pre-heating the air enhances reduces the amount of fuel needed to supply enough heat to the reactor by burner 203. The heat from the burner is transferred to the reactor by allowing the exhaust gas 603 flowing in exhaust gas flow path 15 to exchange heat at heat exchange zones 141 with the reactor chamber 11, so as to provide heat to reaction chamber 11. The absorption of heat by the second and first air supply flow paths 16 and 17 reduces temperature on the outside surface of the device, and therewith increases insulation efficiency. In view of the efficient heat exchange in this embodiment, the outer layer of insulation material 303 is optional.

## Claims

1. Catalytic conversion device for converting a feed gas into a product gas in an endothermic reaction, comprising
a reactor for conversion of said feed gas into said product gas in an endothermic reaction and having an inlet for said feed gas and an outlet for said product gas;
a burner for supplying heat to allow said endothermic reaction;
wherein said reactor and burner are included in a thermally insulated chamber with one or more walls comprising thermal insulation material having an inside facing the inside of said thermally insulated chamber and an outside facing the outside of said thermally insulated chamber, said wall(s) at least partially surrounding said reactor and burner;
wherein one or more first ingoing flow paths are provided extending in the longitudinal direction of said wall(s) within said thermal insulation material or between walls comprising said thermal insulation material, said one or more first ingoing flow paths having an inlet in connection with the outside of said thermally insulated chamber and an outlet in connection with the inside of said thermally insulated chamber to allow ingoing gas flow from the outside of said thermally insulated chamber to the inside of said thermally insulated chamber, such to allow said ingoing gas flow to absorb heat produced on the inside of said thermally insulated chamber and allow reuse of at least part of the absorbed heat as additional heat source for said endothermic reaction.

2. Device according to claim 1, which comprises one or more outgoing flow paths from the inside of said thermally insulated chamber to the outside of the thermally insulated chamber, wherein said one or more outgoing flow paths is configured to allow outgoing gas flow from the inside of said thermally insulated chamber to the outside of the thermally insulated chamber; and wherein one or more of said first ingoing flow path(s) is arranged in a heat exchanging manner with one or more of said outgoing flow path(s), such to allow absorption of heat by said ingoing gas flow from said outgoing gas flow.

3. Device according to any of the previous claims, wherein one or more of said first ingoing flow path(s) is configured to supply air to said burner, so as to function as first air supply flow path and/or
wherein one or more of said first ingoing flow path(s) is configured to supply feed gas to said reactor, so as to function as first feed gas flow path.

4. Device according to any of the claims 2 or 3, wherein one or more of said outgoing flow path(s) is configured to discharge burner exhaust gas from the inside to the outside of the thermally insulated chamber so as to function as burner exhaust gas flow path, and wherein one or more of said burner exhaust gas flow path(s) is arranged in a heat exchanging manner with one or more of said first ingoing flow path(s

5. Device according to claim 4, wherein one or more of said burner exhaust gas flow path(s) is arranged in a heat exchanging manner with one or more of said first air supply flow paths.

6. Device according to any of the claims 2 to 5, wherein one or more of said outgoing flow path(s) is configured to pass product gas from the inside to the outside of the thermally insulated chamber so as to function as product gas flow path, and wherein one or more of said product gas flow path(s) is arranged in a heat exchanging manner with one or more of said first ingoing flow path(s).

7. Device according to any of the previous claims, wherein said catalytic conversion device is a steam reformer device or a steam pre-reformer device.

8. Method for catalytic conversion of a feed gas into a product gas in an endothermic reaction, comprising
i) feeding a catalytic reactor with feed gas and allowing conversion of said feed gas into a product gas in an endothermic reaction using heat produced by burning combustion gas with air with a burner;
wherein said reactor and burner are included in a thermally insulated chamber with one or more walls comprising thermal insulation material having an inside facing the inside of said thermally insulated chamber and an outside facing the outside of said thermally insulated chamber, said walls at least partially surrounding said reactor and burner; and
ii) providing ingoing gas flow from the outside of said thermally insulated chamber to the inside of said thermally insulated chamber through one or more first ingoing flow paths provided extending in the longitudinal direction of said wall(s) within said thermal insulation material or between walls comprising said thermal insulation material, said one or more first ingoing flow paths, said first ingoing flow paths having an inlet in contact with the outside of said thermally insulated chamber and an outlet in connection with the inside of said thermally insulated chamber, such to allow said ingoing gas flow to absorb heat produced on the inside of said thermally insulated chamber;
iii) reusing at least part of the absorbed heat as additional heat source in the thermally insulated chamber.

9. Method according to claim 8, wherein outgoing gas flow flowing from the inside said thermally insulated chamber to the outside of said thermally insulated chamber through one or more outgoing flow paths exchanges heat with said ingoing gas flow in one or more of said first ingoing flow path(s).

10. Method according to any of the claims 8 or 9, comprising passing air through one or more of said first ingoing flow path(s) to supply air to said burner; and/or
comprising passing feed gas through one or more of said first ingoing flow path(s) to supply feed gas to said reactor.

11. Method according to any of the claims 8 to 10, wherein burner exhaust gas is discharged from the inside to the outside of the thermally insulated chamber via one or more of said outgoing flow path(s), and wherein heat exchanges from said burner exhaust gas with gas flowing through one or more of said first ingoing flow path(s).

12. Method according to claim 11, wherein heat exchanges from said burner exhaust gas with air flowing through one or more of said first ingoing flow path(s).

13. Method according to any of the claims 8 to 12, wherein product gas is passed from the inside to the outside of the thermally insulated chamber through one or more of said outgoing flow path(s), and wherein heat exchanges from said product gas with gas flowing through one or more of said first ingoing flow path(s).

14. Method according to any of the claims 8 to 13, wherein air is passed through one or more of said second ingoing flow path(s) to supply air to said burner.

15. Method according to any of the claims 8 to 14, wherein said catalytic conversion device is a steam reformer device and wherein said endothermic reaction comprises reacting a hydrocarbon feed gas with steam to give a hydrogen containing product gas, preferably wherein said hydrocarbon feed gas comprises methane; or wherein said catalytic device is a pre-reformer device and wherein said endothermic reaction comprises reacting a hydrocarbon feed gas with steam to give a methane rich product suitable for downstream reforming.
